# EUROPÄISCHE PATENTSCHRIFT

(11) **EP 3 238 874 B1**
(45) Veröffentlichungstag und Bekanntmachung des Hinweises auf die Patenterteilung: **10.06.2020**
(21) Anmeldenummer: 16167815.6
(22) Anmeldetag: 29.04.2016
(51) Int. Cl.: B23Q 5/32, B25F 5/00, B23B 45/00, B23B 47/18

(54) **BOHRMASCHINE, BOHRMASCHINENSYSTEM UND VERWENDUNG EINER BOHRMASCHINE**
DRILLING MACHINE, DRILLING MACHINE SYSTEM AND USE OF A DRILLING MACHINE
PERCEUSE, SYSTÈME DE PERCEUSE ET UTILISATION D'UNE PERCEUSE

(43) Veröffentlichungstag der Anmeldung: 01.11.2017
(73) Patentinhaber: Johannes Lübbering GmbH, 33442 Herzebrock-Clarholz (DE)
(72) Erfinder: Stafflage, Johannes, 33442 Herzebrock-Clarholz (DE); Langhorst, Thomas, 33428 Harsewinkel-Greffen (DE)
(74) Vertreter: Patentanwälte Behrmann Wagner PartG mbB

(56) Entgegenhaltungen:
- GB-A- 657 310
- US-A- 5 205 681
- US-A1- 2007 209 813
- US-A1- 2008 260 485
- US-A1- 2014 318 290

## Beschreibung

Die vorliegende Erfindung betrifft eine Bohrmaschine nach dem Oberbegriff des Patentanspruchs 1, wie sie aus der US 5 205 681 A bekannt ist. Ferner betrifft die vorliegende Erfindung eine Verwendung einer derartigen Bohrmaschine, und die vorliegende Erfindung betrifft ein System unter Nutzung einer derartigen Bohrmaschine.

Gattungsgemäße Bohrmaschinen mit einer zum rotatorischen Antreiben eines ansitzenden oder ansetzbaren Bohrwerkzeugs ausgebildeten Spindel sind aus dem Stand der Technik allgemein bekannt. Neben für die manuelle Handhabung ausgebildeten Handbohrmaschinen existieren dabei insbesondere festmontierte Ständerbohrmaschinen, und es gibt verschiedenste Ausgestaltungen vom privaten bis zum industriellen Gebrauch.

Insbesondere in der industriellen Produktion eingesetzte Bohrmaschinen erfordern, neben dem motorischen Spindelantrieb, häufig eine weitere Funktionalität, nämlich das Erzeugen eines axialen Vorschubs für die (Bohr-)Spindel, neben deren rotatorischem Antrieb: Häufig machen besondere Anforderungen, etwa in industriellen Montage- und Produktionsumgebungen, einen kontrollierten, an die Eigenschaften eines zu bohrenden Werkstoffs sowie eine Antriebsleistung für die Spindelrotation angepassten Vorschub notwendig, welcher allein durch manuelle Betätigung nicht ausreichend leistbar ist.

Entsprechend ist es, mit verschiedenen, parallel zueinander existierenden Lösungsansätzen, aus dem Stand der Technik bekannt, zusätzlich zum rotatorischen Spindelantrieb auch einen (axial einen Spindelvorschub bzw. eine Spindelbewegung bewirkenden) Verstellantrieb an der Spindel vorzusehen. Dabei kommen, neben voneinander getrennten Antriebslösungen für den Rotationsantrieb sowie für die Axialverstellung, insbesondere auch integrierte Lösungen in Betracht, welche, über geeignete integrierte, gemeinsame Getriebelösungen, an der Spindel beide Betriebsfunktionalitäten ermöglichen. So offenbart etwa die GB 2 489 018 A eine Bohrmaschinentechnologie für den industriellen Gebrauch, bei welcher, über eine mittels eines gekoppelten Paares von Planetengetrieben realisiert, eine integrierte Getriebeanordnung sowohl das Rotationsmoment eines Hauptantriebs, als auch ein Vorschub- bzw. Verstellmoment eines Verstellantriebs in der vorgesehenen Weise auf die Bohrspindel bringt und, im Rahmen einer solchen integrierten Getriebeanordnung, eine geeignete Entkopplung sicherstellt.

Allerdings hat sich diese bekannte Lösung als technologisch anspruchsvoll und konstruktiv aufwändig erwiesen, so dass insbesondere im Hinblick auf eine einfache, potenziell serientaugliche Fertigung Verbesserungsbedarf gesehen wurde.

Eine entsprechende Weiterbildung ist dann in Form der technischen Lehre der EP 2 754 531 B1 erfolgt. Basierend auf dem technischen Grundprinzip der vorgenannten Druckschrift zum Stand der Technik wird hier, wiederum unter Nutzung eines (allerdings einzelnen) Planetengetriebes, ein modulartiges Getriebe vorgeschlagen, welches das Antriebsmoment zweier Antriebsmotoren - eines ersten für den Spindel-Drehantrieb, eines zweiten für die axiale Spindelverstellung - so auf die Spindel überträgt, dass eine kompakte, mit begrenztem Bauteileaufwand realisierte und betriebssichere Vorrichtung entsteht.

Konstruktiv wesentlich für die Realisierung des (gemeinsamen) Getriebes dieser bekannten Technologie ist dabei das Vorsehen des Planetengetriebes, dessen Sonnenrad mit dem für die Spindelverstellung vorgesehenen Antriebsmotor verbunden ist. Satelliten des Planetengetriebes kämmen das Sonnenrad und greifen in eine kranzförmige Innenverzahnung eines becherförmigen Rades ein, welches wiederum außenseitig den rotatorischen Spindelantrieb bewirkt. Das den Spindelvorschub beeinflussende Übersetzungsverhältnis dieses Getriebes wird dabei vor allem beeinflusst von dem Sonnenrad, den Satelliten und dem inneren Zahnkranz. Während diese bekannte Technologie gemäß EP 2 754 531 B1 konstruktiv elegant und mit einer minimierten Anzahl von Getriebebauelementen realisiert ist, erscheint gleichwohl eine derartige Technologie, insbesondere im Hinblick auf eine variable Fertigbarkeit gattungsgemäßer Bohrmaschinen, unflexibel und damit verbesserungsbedürftig: So kann es nämlich insbesondere unter Gesichtspunkten einer Konstruktion bzw. einer Einrichtung bekannter Bohrmaschinen sinnvoll sein, den Vorschub in Abhängigkeit von einem Einsatzgebiet der Bohrmaschine, insbesondere von der Art der zu schneidenden Bohrungen, typischen Bohrwerkzeugdurchmessern, Werkstück-Materialeigenschaften und dgl., anzupassen bzw. geeignet einzurichten. Dies ist insbesondere sinnvoll etwa im technologisch anspruchsvollen und sensiblen Gebiet der Luftfahrzeugfertigung, wo neben typischen Metallmaterialien insbesondere auch zunehmend (Kunststoff-)Verbundmaterialien zu bohren sind, welche im Hinblick auf eine gattungsgemäß vorzusehende und anzutreibende axiale Spindelverstellung andere Anforderungen stellen.

Während die Technologie gemäß EP 2 754 531 B1 zu diesem Zweck prinzipiell die variable elektronische Ansteuerung des für den Verstellantrieb vorgesehenen und angekoppelten Motors vorsehen könnte, stellt sich gleichwohl häufig eine derartige Anpassbarkeit als in der Praxis ungenügend heraus, etwa im Hinblick auf gewünschte Drehmomenteigenschaften. Dagegen würde jedoch das mechanische Anpassen der Getriebeübersetzung für den Verstellantriebsstrang beim Stand der Technik gemäß EP 2 754 531 B1 erheblichen konstruktiven Aufwand verursachen, denn aufgrund des an diesem Übersetzungsverhältnis beteiligten Innenkranz des becherförmigen Bauelementes der bekannten Technologie ist nicht nur die konstruktiv-geometrische Anpassung für verschiedene Ausführungen der Bohrmaschine schwierig (was dann auch für die Ausgestaltung des Sonnenrades gilt, welches typischerweise auf einer dem Verstellantriebsmotor zugeordneten Welle sitzt), auch sind diese Baugruppen, insbesondere die innenverzahnte Baugruppe, teuer und aufwändig in der Herstellung und Montage.

Aufgabe der vorliegenden Erfindung ist es daher, eine gattungsgemäße Bohrmaschine nach dem Oberbegriff des Hauptanspruchs im Hinblick auf ihre Einrichtungs-, Konfigurations- und Montageeigenschaften, insbesondere im Hinblick auf ihre Flexibilität bei der getriebetechnischen Anpassung einer den Verstellantrieb für die axiale Spindelverstellung beeinflussenden Getriebeübersetzung, zu vereinfachen und zu flexibilisieren, dabei insbesondere die Möglichkeit zu schaffen, unter weitestgehender Nutzung von Gleichteilen, unter Vermeidung konstruktiv aufwändiger und teurer Baugruppen und bei vereinfachter Montier- und potenziell auch Auswechselbarkeit die konstruktiven Voraussetzungen für verschiedenste, im Hinblick auf diese Getriebeübersetzung veränderbare Herstellungsvarianten zu schaffen.

Die Aufgabe wird durch die Bohrmaschine mit den Merkmalen des Patentanspruchs 1 gelöst. Vorteilhafte Weiterbildungen der Erfindung sind in den Unteransprüchen beschrieben. Zusätzlich Schutz im Rahmen der Erfindung wird beansprucht für ein Bohrmaschinensystem, welches unter Nutzung der erfindungsgemäßen und hauptanspruchsgemäßen Bohrmaschine diesem zusätzlich eine Zahnradanordnung zum Austausch gegen eine montierte Zahnradanordnung so zuordnet, dass bei einem Montieren und nachfolgenden Betreiben des weiteren Satzes der Zahnräder (Zahnradanordnung) im Getriebemodul ein abweichendes Übersetzungsverhältnis für den Verstellantrieb, nämlich des Übersetzungsverhältnisses zwischen dem zweiten Antriebsmotor und dem Verstellrad für die Spindel, realisiert ist.

Ferner wird Schutz im Rahmen der Erfindung beansprucht für eine Verwendung der erfindungsgemäßen Bohrmaschine als Handbohrmaschine, und es wird erfindungsgemäß Schutz beansprucht für die Verwendung der erfindungsgemäßen Bohrmaschine, bevorzugt in einer Ausführung als Handbohrmaschine, zum Fertigen von Bohrungen für Luftfahrzeuge und/oder zum Antreiben von Bohrwerkzeugen, welche sich insbesondere günstig für bei der Fertigung von in Luftfahrzeugen gebräuchlichen modernen Materialien und Bohrdurchmessern eignet.

In erfindungsgemäß vorteilhafter Weise weist das erfindungsgemäße Hohlrad- und Innenverzahnungs-freie Getriebemodul zunächst ein Verstellrad auf, welches zum kämmenden Eingreifen in eine Verzahnung einer Verstellmutter ausgebildet ist, welche wiederum, in oberbegrifflich bekannter Weise, schlittenartig mit einem Gewindeabschnitt der Spindel für deren Axialverstellung zusammenwirkt. Dieses Verstellrad weist eine (kranzförmige) Außenverzahnung auf, welche von einer Zahnradanordnung angetrieben wird, welche mindestens ein erstes Zahnrad und mindestens ein zweites Zahnrad aufweist. Das mindestens eine erste Zahnrad, typischerweise realisiert als um eine Welle des zum Bewirken der Verstellung vorgesehenen (zweiten) Antriebsmotors herum angeordnete Mehrzahl von ersten Zahnrädern, nimmt ein Antriebsmoment des zweiten Antriebsmotors auf und übertragt dieses auf erfindungsgemäße zweite Zahnräder der Zahnradanordnung, welche, typischerweise wiederum in Mehrzahl (und in einer der Mehrzahl der ersten Zahnräder entsprechenden Anzahl) um die Außenverzahnung des Verstellrades herum angeordnet, das Antriebsmoment der ersten Zahnräder auf diese Außenverzahnung übertragen. Dabei ist es besonders bevorzugt, wenn das zweite Zahnrad, mit seinem Zahnkreisbereich eine axiale Mindesterstreckung aufweisend, unmittelbar mit dem ersten Zahnrad und der Außenverzahnung kämmt, so dass eine unmittelbare Übertragung stattfindet.

Das erste und das zweite Zahnrad (bevorzugt jeweils in Mehrzahl) ist dann erfindungsgemäß in einem käfigartigen Zahnradträger so gehalten, dass zumindest das zweite Zahnrad, bevorzugt aber das erste und das zweite Zahnrad (wiederum weiter bevorzugt jeweils in gleicher Mehrzahl) bei einer Demontage des Verstellrades durch Herausziehen jeweils zugeordneter Drehachsen aus dem Träger vom Getriebemodul lösbar und entsprechend austauschbar ist/sind, insbesondere auch gegen ein Paar aus erstem und zweitem Zahnrad (wiederum auch bevorzugt jeweils in Mehrzahl), welches dann ein abweichendes Übersetzungsverhältnis realisiert.

Erfindungsgemäß vorteilhaft bedeutet also diese Getrieberealisierung eine Abkehr vom aufwändigen Prinzip des Planetengetriebes; vielmehr wird der gattungsgemäß notwendige, konstruktiv aufwändige und im Hinblick auf eine Übersetzungsanpassung problematische innenverzahnte Kranz unnötig, indem die vorliegende Erfindung das zum Zusammenwirken mit der Verstellmutter vorgesehene Verstellrad über einen Außengewindeabschnitt mittels der weiteren Kombination aus erstem und zweitem Zahnrad antreibt und so dann die Verbindung zur Antriebswelle des Verstellmotors herstellt. Die Erfindung nimmt damit den scheinbaren Nachteil eines erhöhten Bauteileaufwandes in Kauf, denn die Zahl der beteiligten Getriebeelemente erhöht sich (und würde bei typischem Mehrfach-Vorsehen des ersten und des zweiten Zahnrades entsprechend multipliziert), dieser scheinbare Nachteil wird jedoch im Rahmen der Erfindung aufgewogen durch die Kombination aus deutlich erhöhter Flexibilität durch Austauschbarkeit und Einrichtbarkeit verschiedenster Übersetzungsverhältnisse lediglich durch Vorsehen geeignet in Durchmesser bzw. Verzahnung angepasster erster bzw. zweiter Zahnräder, ohne dass etwa konstruktiv aufwändigere Baugruppen angepasst oder ausgetauscht werden müssten. Zudem ermöglicht dieser unter Vermeidung der Planetengetriebetechnologie gefundene erfindungsgemäße Lösungsansatz eine einfache Anpassung bzw. Änderung des Übersetzungsverhältnisses im Verstellantriebsstrang für die axiale Spindelverstellung, nämlich im einfachsten Fall durch geeignetes Austauschen des ersten und zweiten Zahnrades, welche, wie auch im Rahmen der erfindungsgemäß beanspruchten Systemlösung, geeignet in der Art eines Baukastens vorgehalten bzw. konfiguriert werden können und so die flexible und adaptive Anpassung an verschiedenste Erfordernisse einer jeweiligen Bohrmaschine für ihren Einsatzzweck gestattet.

Dabei ist es konstruktiv besonders einfach und für die beschriebenen Montage- bzw. Demontagezwecke elegant, das (für die Verstellmutter vorgesehene) Verstellrad und den käfigartigen Zahnradträger, bevorzugt zusätzlich ein das Drehantriebsrad für die Drehbeaufschlagung der Spindel vorgesehenes Zahnrad (Zahnradeinheit) koaxial auf einer dem zweiten Antriebsmotor (also dem für den Verstellantrieb vorgesehenen Motor) zugeordneten Welle vorzusehen und bevorzugt achsparallel zur Bohrspindel zu lagern; weiter bevorzugt rahmen die für den Abtrieb der Getriebemittel eingerichteten Aggregate, nämlich das Verstellrad und die Zahnradeinheit, in axialer Richtung den käfigartigen Zahnradträger zwischen sich ein. Insbesondere vor dem Hintergrund einer vereinfachten konstruktiven Realisierung als manuell handhabbares, portales Werkzeug ist es zudem vorteilhaft, mindestens einen der Antriebsmotoren, bevorzugt beide der Antriebsmotoren, winklig an das Getriebemodul anzusetzen, wobei insbesondere eine rechtwinklige Ansatzposition für den ersten und für den zweiten Antriebsmotor in besonders geeigneter Weise den Vorteil ermöglicht, dass diese Motoren, insbesondere ein typischerweise leistungsstärkerer erster Antriebsmotor für den rotatorischen Spindelantrieb, dann geeignet in einem für die manuelle Handhabung vorgesehenen Griffabschnitt der Vorrichtung untergebracht werden können. Alternativ ist auch in der Art einer Inline-Anordnung ein Winkel 0° möglich.

Während es einerseits, insbesondere vor dem Hintergrund niedriger Getriebebauelementkosten und einfacher Montage, vorteilhaft ist, das erfindungsgemäße (mindestens eine) zweite Zahnrad der Zahnradanordnung mit einer durchgehenden, einzelnen und ungestuften Verzahnung vorzusehen, also dieselbe Zahnradgeometrie sowohl axial einends auf das erste Zahnrad, als auch anderenends auf die Außenverzahnung des Verstellrades wirken zu lassen, liegt es gleichwohl im Rahmen alternativer und gleichermaßen bevorzugter Realisierungsformen der Erfindung, mindestens eines der ersten bzw. zweiten Zahnräder, bevorzugt das zweite Zahnrad, so mit einer gestuften Verzahnung vorzusehen, dass den genannten Partnern unterschiedliche Zahnradgeometrien gegenüberstehen. Vorteilhaft ist es beispielsweise, für das zweite erfindungsgemäße Zahnrad einen Zahnradabschnitt eines größeren Zahnkreisdurchmessers mit der (weiter bevorzugt auch gestuft vorgesehenen) Außenverzahnung des Verstellrades in Eingriff treten zu lassen, während ein Zahnradabschnitt eines kleineren Zahnkreisdurchmessers des zweiten Zahnrads mit dem ersten Zahnrad kämmt. Auf diese Weise lässt sich die Variabilität bzw. die Variantenbreite im Herstellen unterschiedlicher Übersetzungen im Verstell-Getriebestrang weiter modifizieren bzw. ausgestalten.

Während zudem die vorliegende Erfindung zwar als Handgerät besonders günstig betreib- und handhabbar ist (nicht zuletzt aufgrund der schlanken und kompakten Realisierung der erfindungsgemäßen Getriebemittel, bevorzugt achsparallel zur Bohrspindel), ist gleichwohl die vorliegende Erfindung nicht auf diese Realisierungsform beschränkt. Vielmehr ist sowohl das Einsetzen der Erfindung im Rahmen einer stationären, etwa einer Ständerbohrmaschine umfasst, wie auch Verwendungen der erfindungsgemäßen Bohrmaschine über einen Luftfahrzeugkontext hinaus. Letztendlich eignet sich die vorliegende Erfindung in günstiger Weise für jedweden Verwendungszweck, bei welchem die Vorteile einer sorgfältig abgestimmten bzw. durch geeignete Getriebekonfiguration eingestellten Vorschub-Axialverstellung mit den erfindungsgemäß realisierten Vorteilen bei einfacher Montage und Fertigbarkeit, auch bei verschiedenen zu implementierenden Übersetzungsvarianten, kombiniert werden können.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1: eine Seitenansicht der erfindungsgemäßen Bohrmaschine gemäß einem ersten Ausführungsbeispiel in Seitenansicht, mit einem langgestreckten, pistolenartigen Gehäuse;
- Fig. 2A, Fig. 2B: Perspektivansichten der erfindungsgemäßen Getriebemittel im ersten Ausführungsbeispiel der Fig. 1 mit zusätzlich gezeigter Spindel, Drehantriebsrad sowie Verstellmutter, wobei Fig. 2A ein erstes und Fig. 2B ein demgegenüber variiertes zweites Ausführungsbeispiel bei ansonsten gleichen Ansichten zeigen;
- Fig. 3A, Fig. 3B: Perspektivansichten analog Fig. 2A bzw. 2B, jedoch mit demgegenüber in Explosionsdarstellung gelöst gezeigtem käfigartigen Zahnradträger;
- Fig. 4A, Fig. 4B: eine Perspektivansicht analog Fig. 2A, B bzw. Fig. 3A, B mit gegenüber diesen Figuren entferntem Zahnradträger zum Verdeutlichen des Zusammenwirkens der Zahnräder im montierten Zustand;
- Fig. 5A, Fig. 5B: axial geschnittene Teilansichten des Ausführungsbeispiels der Fig. 1 bis Fig. 4 mit entfernter Verstellmutter bzw. entferntem Verstellrad zum Verdeutlichen insbesondere des Zusammenwirkens der Zahnräder im Getriebemodul;
- Fig. 6A, Fig. 6B: Längsschnittansichten des vorgenannten Ausführungsbeispiels, wiederum in den Varianten A bzw. B und
- Fig. 7: eine explosionsartig gezeigte Detailansicht zum Verdeutlichen eines möglichen Auswechselns bzw. Austauschens des ersten bzw. zweiten Zahnrades im käfigartigen Zahnradträger.

Bei sämtlichen Zeichnungen bedeutet dabei die Figurenkennung "A" ein erstes Ausführungsbeispiel, während die Figurenkennung "B" ein demgegenüber variiertes zweites Ausführungsbeispiel anzeigt; das zweite Ausführungsbeispiel B unterscheidet sich vom ersten Ausführungsbeispiel durch ein gestuft ausgeführtes zweites Zahnrad, wie nachfolgend im Detail zu erläutern sein wird.

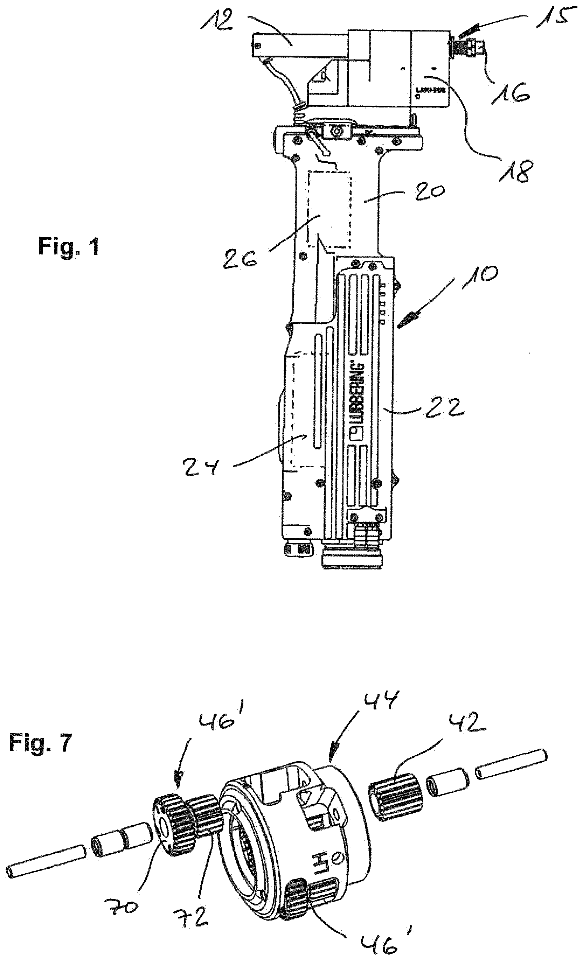

Die Fig. 1 zeigt in der Seitenansicht ein zur manuellen Handhabung vorgesehenes, aus einem Kunststoffmaterial realisiertes Gehäuse der erfindungsgemäßen Bohrmaschine entsprechend der im Detail zu erläuternden bevorzugten Ausführungsbeispiele. Eine in der Fig. 1 horizontal verlaufende und von einem hülsenförmigen Gehäuse 12 eingefasste (Bohr-) Spindel 15 weist an einem eingriffsseitigen Ende 16 eine ansonsten bekannte Kupplung zum Einsetzen und Fixieren von Bohrwerkzeugen auf.

Ein Getriebegehäuseabschnitt 18 umschließt in der gezeigten Weise partiell die im Abschnitt 12 aufgenommene Spindel und geht bodenseitig über in einen ersten, im Durchmesser verjüngten Griffabschnitt 20 sowie einen daran ansitzenden zweiten, demgegenüber verbreiterten Griffabschnitt 22. Diese Griffabschnitte 20, 22 dienen zur Aufnahme eines ersten Antriebsmotors 24 (nicht im Detail gezeigt) für einen rotatorischen Antrieb der Spindel bzw. eines zweiten Antriebsmotors 26 (nicht im Detail gezeigt) zum Bewirken einer nachfolgend im Detail zu erläuternden Vorschubverstellung der Spindel in deren axialer Erstreckungsrichtung. Aufgrund unterschiedlicher Motorleistungen ist der typischerweise größer dimensionierte erste Antriebsmotor 24 im verbreiterten Griffbereich 22, der demgegenüber schwächere zweite Antriebsmotor 26 (Verstellmotor) im Zwischenabschnitt 20 aufgenommen und über nicht näher im Detail gezeigte Motorwellen an zugeordnete Kegelräder 24k für den ersten Antriebsmotor bzw. 26k für den zweiten Antriebsmotor angekoppelt; entsprechend der langgestreckten Gehäuseform der Fig. 1 ist dem Motor 24 eine entsprechend längere (in den Figuren nicht gezeigte) Welle zum zugehörigen Kegelrad 24k zugeordnet und am Motor 26 vorbeigeführt.

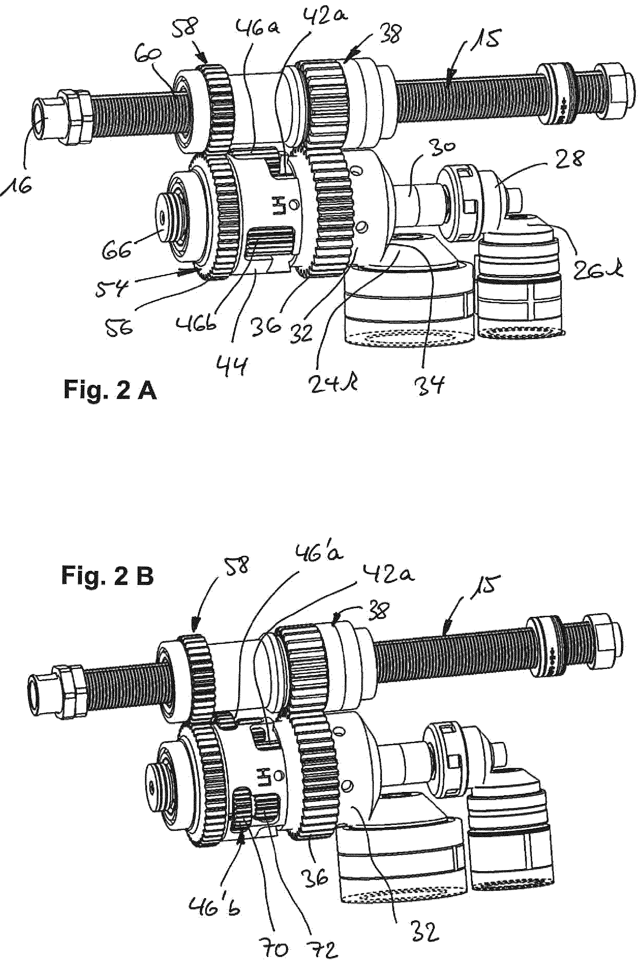

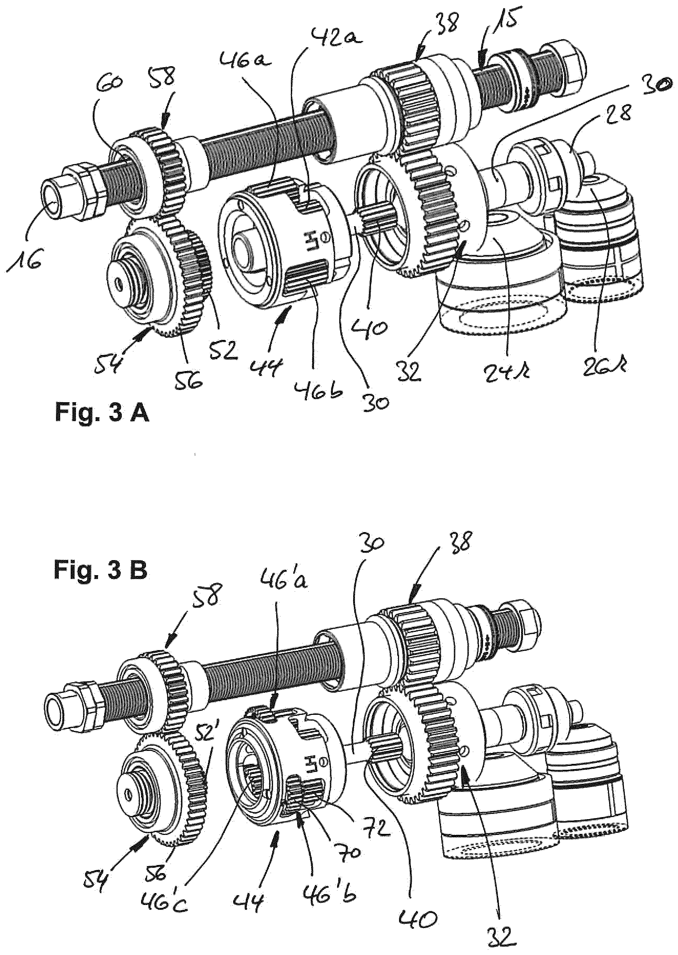

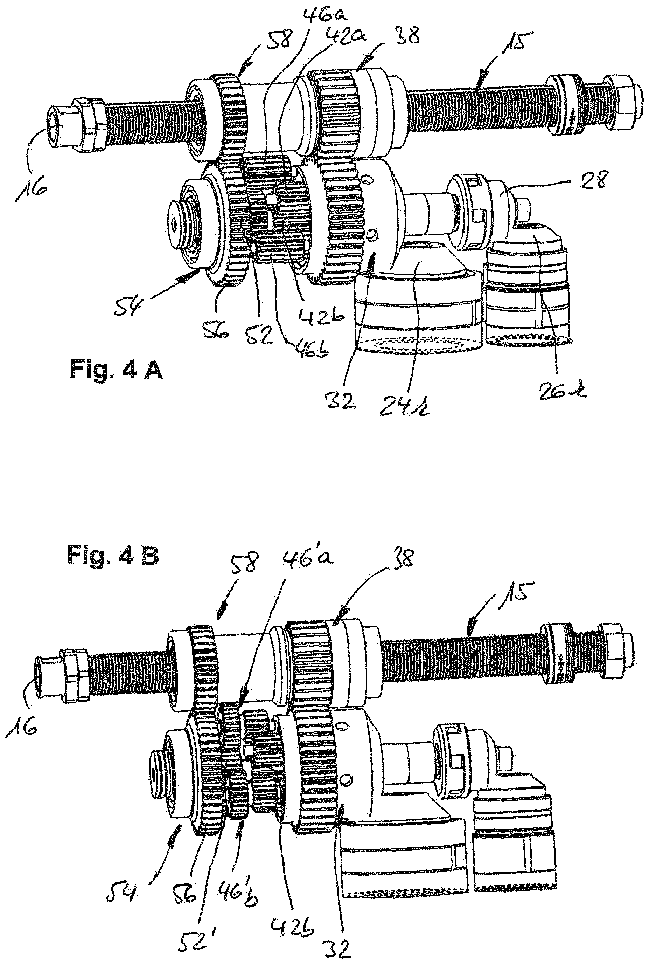

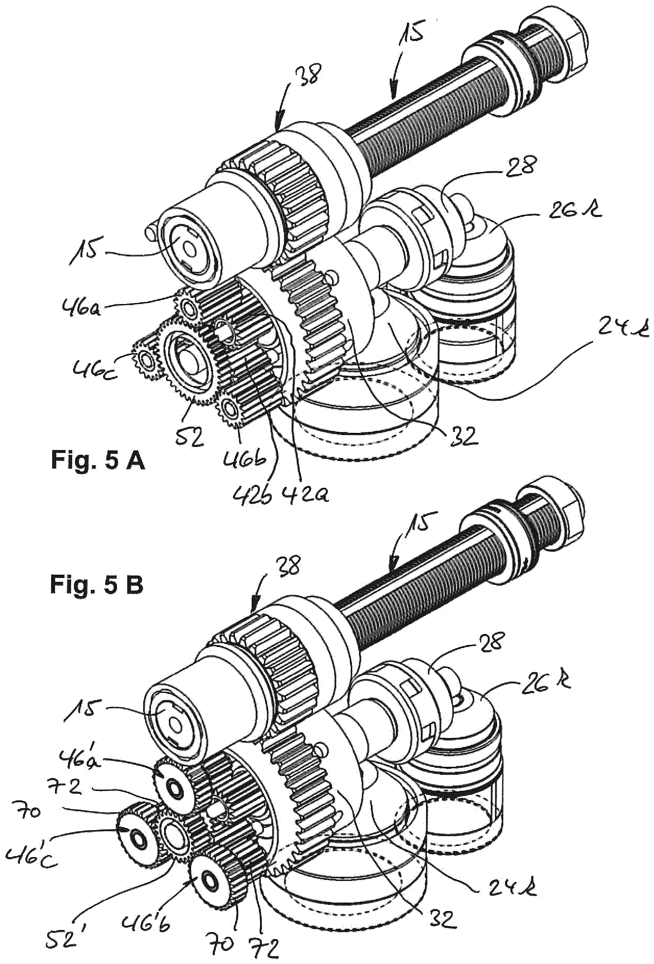

Die Figuren 2 bis 6 (jeweils mit den Einzeldarstellungen "A" für das erste und "B" für das alternative zweite Ausführungsbeispiel) verdeutlichen, wie ein Antriebsmoment dieser Antriebsmotoren über die jeweils zugeordneten Kegelräder 24k bzw. 26k in ein Getriebemodul eingekoppelt wird, welches im Gehäuseabschnitt 18 (Fig. 1) sitzt und einerseits die rotatorische Antriebsverbindung, andererseits die axial wirkende Längsverstellungsverbindung zur Spindel 15 bewirkt: Ein mit dem Kegelrad 26k des zweiten Antriebsmotors (für die Axialverstellung) im Längsschnitt rechtwinklig zusammenwirkendes Kegelrad 28 sitzt auf einer sich i.W. parallel zur Spindel 15 erstreckenden Verstellwelle 30 und treibt diese entsprechend einer Rotation des Kegelrades 26k in eine Drehbewegung an. Das dem Drehantriebsmotor (ersten Antriebsmotor) 24 zugeordnete Kegelrad 24k wirkt gleichermaßen rechtwinklig mit einer Rotationsbetriebs-Zahnradeinheit 32 zusammen, welche an einem kegelverzahnten Abschnitt 34 mit dem Kegelrad 24k kämmt. Eine Außenverzahnung 36 der drehbar auf der Welle 30 gelagerten Zahnradeinheit 32 kämmt mit einer Außenverzahnung eines Drehantriebsrades 38, welches, in den Figuren nicht im Detail gezeigt, über Sperrmittel drehfest mit der Spindel 15 verbunden ist. Damit überträgt die beschriebene Zahnrad-Wirkungskette ein Antriebsmoment des ersten Antriebsmotors 24 über die Baugruppen 24k - 32 - 38 auf die Spindel 15.

Die dem zweiten Antriebsmotor 26 zugeordnete Verstellwelle 30 weist an einem Mantelabschnitt einen Außenverzahnungsbereich 40 auf, welcher kämmend mit einem Satz von drei Zahnrädern 42a, 42b, 42c kämmend zusammenwirkt, welche wiederum, um einen Umfang der Welle 30 herum verteilt in einem käfigartigen Zahnradträgergehäuse 44 gelagert, mit einem Satz von drei versetzt radial (bezogen auf die Welle 30) außenliegenden zweiten Zahnrädern 46a, 46b, 46c, jeweils paarweise zugeordnet, kämmen.

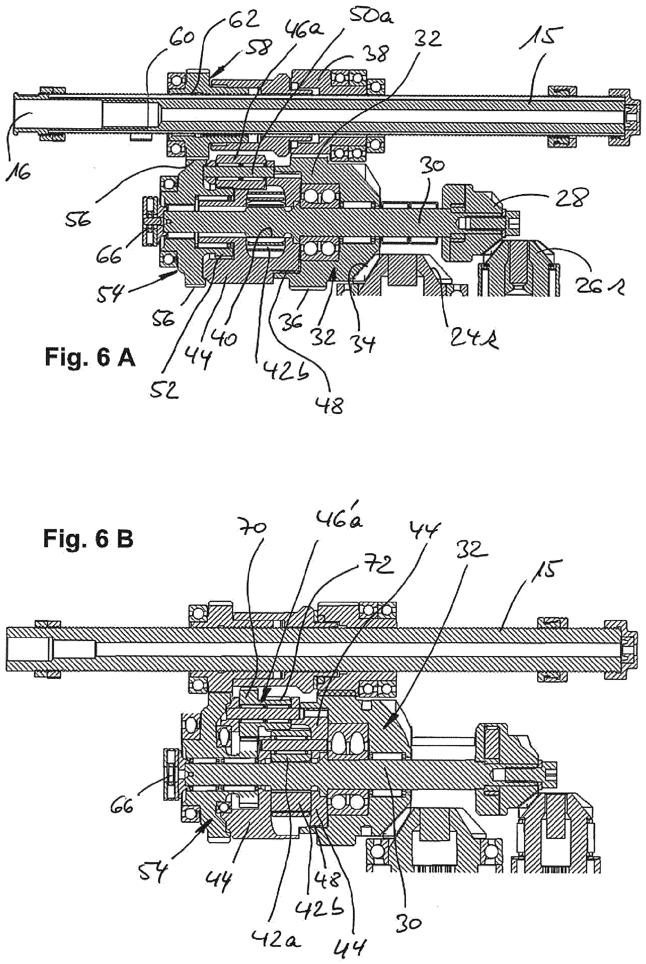

Auch diese radial äußeren zweiten Zahnräder 46a-c sind drehbar im käfigartigen Trägergehäuse 44 gelagert, welches, angedeutet durch ein Schraubgewinde 48 (Fig. 6A, B) drehfest mit der Baugruppe 32 (der Zahnradeinheit für den Rotations-Drehantrieb der Spindel) verbunden, gleichwohl zur Demontage lösbar ist. Die Schraubverbindung 48, vergleiche insbesondere die Schnittansichten von Fig. 6A, Fig. 6B, verriegeln im gezeigten Montagezustand die den zweiten Zahnrädern 46a-c jeweils zentrisch zugeordneten Dreh- bzw. Mittelachsen 50a-c.

Wie wiederum die verschiedenen Ansichten der Figurenpaare 2 bis 6 verdeutlichen, greift ein axialer Abschnitt der zweiten Zahnräder 46a in einen zweiten außenverzahnten Abschnitt 52 eines Verstellrades 54, welches wiederum, über einen ersten außenverzahnten Abschnitt 56, mit einer der Spindel 15 zugeordneten und zu deren Axialverstellung ausgebildeten Verstellmutter 58 kämmt. Konkret bewirkt die Verstellmutter 58 mittels eines mit einem Außengewinde 60 der Spindel 15 zusammenwirkenden Innengewindeabschnitt 62 die Spindel-Längsverstellung in der Art eines Gewindeschlittens bei Drehantrieb durch die Verstellmutter 58 entsprechend der vorbeschriebenen Wirkungskette.

Es wird deutlich, dass das so aufgebaute Getriebemodul weder einen innenverzahnten Zahnkranz noch ein (zugehöriges) Hohlrad aufweist, mithin die vorliegende Erfindung ohne die Realisierung eines Planetengetriebes auskommt. Vielmehr sorgt insbesondere das erfindungsgemäß ausschließlich außenverzahnte Räder bzw. Zahnradabschnitte aufweisende Erfindungsprinzip in Form des Verstellrades 54 (mit den Verzahnungsabschnitten 52, 56), der zweiten Zahnräder 46a-c, der ersten Zahnräder 42a-c sowie des außenverzahnten Wellenabschnitts 40 nicht nur für eine in der Herstellung und Montage günstige Konfiguration der Einzelkomponenten bzw. deren montierter Anordnung, auch lässt sich durch diese Realisierung in besonders einfacher Weise ein Austausch sowie eine baukastenartige Änderung eines resultierenden Übersetzungsverhältnisses in der beschriebenen Verstell-Getriebelösung realisieren, nämlich am einfachsten durch geeignetes Abstimmen und Einrichten der jeweiligen, das Übersetzungsverhältnis mitbestimmenden Paare aus erstem Zahnrad 42a-c, mit dem jeweils zugeordneten zweiten Zahnrad 46a-c. Zudem ermöglicht insbesondere die konstruktiv vorteilhafte und elegante Anordnung der Baugruppen 54, 44 (mit darin sitzenden ersten bzw. zweiten Zahnrädern) sowie 32 entlang einer axialen Erstreckungsrichtung der Welle 30 eine äußerst einfache Montage bzw. Demontage; zum Lösen etwa des Verstellrades 54 muss lediglich ein endseitig der Welle 30 befestigtes Axiallager 66 entfernt werden, woraufhin dann, nach Abziehen des Rades 54 und daraufhin des Gehäusekäfigs 44, ein einfachster Austausch der ersten bzw. zweiten Zahnradpaare ermöglicht ist. Entsprechend einfach erfolgt die (Wieder-)Montage.

Anhand der Fig. 7 ist entsprechend dem zweiten Ausführungsbeispiel der jeweiligen Teilfiguren "B" eine weitere, ggf. auch zusätzlich ermöglichte Variante gezeigt, das Übersetzungsverhältnis im Verstellgetriebe einfach und mit geringem konstruktiven und Montageaufwand umzukonfigurieren. Insbesondere die Fig. 7, insoweit entsprechend dem zweiten Ausführungsbeispiel B, zeigt als Variante des zweiten Zahnrades 46a, 46b, 46c ein Zahnrad 46', welches gegenüber der ersten Ausbildung keinen axial durchgehenden gleichen Durchmesser (Zahnkranzdurchmesser) aufweist, vielmehr weist das zweite Zahnrad 46'(entsprechend der Ausführungsform B) eine gestufte Konfiguration auf, in Form eines ersten Zahnradabschnittes 70 eines größeren Zahnkreisdurchmessers der zugehörigen Au-ßenverzahnung und eines zweiten Zahnradabschnittes 72 eines demgegenüber kleineren Zahnkreisdurchmessers der Außenverzahnung. Wie diesbezüglich die jeweiligen Figuren 2B...6B verdeutlichen, kämmt der zweite Zahnradabschnitt 72 der wiederum auch als Dreiergruppe vorgesehenen zweiten Zahnräder 46' mit dem ersten Zahnrad 42a bzw. 42b bzw. 42c, während der erste Zahnradabschnitt 70 durch Zusammenwirken mit der Außenverzahnung 52 das Verstellrad 54 antreibt. Mit anderen Worten, die durch das Verhältnis 70/72 ermöglichte Stufung, in Verbindung mit dem ersten Zahnrad 42 sowie dem Durchmesser der Außenverzahnung 52 (diese ist, relativ zum ersten Ausführungsbeispiel gemäß "A", mit einem geringeren Außendurchmesser versehen und daher mit 52' bezeichnet) gestaltet in noch flexiblerer Weise das Vorsehen verschiedenster Übersetzungen entlang dieser Getriebekette.

Während zudem im Rahmen der gezeigten Ausführungsbeispiele eine Handbohrmaschine mit Vertikalgriff entsprechend Fig. 1 geschaffen wurde, ist die Erfindung weder auf eine solche Anordnung, noch etwa auf das damit verbundene abgewinkelte Ansetzen des ersten bzw. zweiten Antriebsmotors (bzw. zugeordneter Motorwellen) beschränkt. Diese können ebenso auf beliebige andere Weise an das erfindungsgemäße Getriebemodul angekoppelt werden, wie auch dieses dann etwa nicht parallel entlang der Welle 30, sondern auch anders angewinkelt an die Verstellmutter bzw. das Drehantriebsrad der Spindel angesetzt sein können.

Soweit zudem günstige Betriebs- bzw. Konfigurationsparameter des beschriebenen Getriebemoduls für den gemeinsamen Dreh- und Verstellbetrieb der Spindel, etwa betreffend Übertragungsverhältnisse, Drehgeschwindigkeitsverhältnisse usw. nicht im Detail in der vorliegenden Beschreibung diskutiert sind, kann etwa auf die gattungsbildende EP 2 754 531 B1 verwiesen werden.

## Patentansprüche

1. Bohrmaschine mit einer zum rotatorischen Antreiben eines ansitzenden oder ansetzbaren Bohrwerkzeugs ausgebildeten Spindel (15), der mit einem ersten Antriebsmotor (24) zusammenwirkende Drehantriebsmittel für das rotatorische Antreiben sowie mit einem zweiten Antriebsmotor (26) zusammenwirkende Verstellantriebsmittel für eine axiale Verstellung der Spindel so gemeinsam zugeordnet sind,
dass während des rotatorischen Antreibens durch den ersten Antriebsmotor eine axiale Verstellung der Spindel durch Wirkung des zweiten Antriebsmotors erfolgen kann,
wobei die Drehantriebsmittel ein drehfest mit der Spindel verbundenes Drehantriebsrad (38) und die Verstellantriebsmittel eine schlittenartig mit einem Gewindeabschnitt (60) der Spindel (15) zusammenwirkende Verstellmutter (58) aufweisen
und Getriebemittel zum Zusammenwirken mit dem Drehantriebsrad (38)
und der Verstellmutter (58) als Getriebemodul integriert und zum Verbinden mit dem ersten und dem zweiten Antriebsmotor (24, 26) ausgebildet sind,
wobei
die Getriebemittel zum kämmenden Eingreifen in eine Verzahnung der Verstellmutter (58) ein Verstellrad (54) aufweisen, welches von einer auf eine Außenverzahnung (52) des Verstellrades greifenden Zahnradanordnung (46, 42) so angetrieben wird,
dass mindestens ein erstes Zahnrad (42 a-c) der Zahnradanordnung ein Antriebsmoment des zweiten Antriebsmotors empfängt, insbesondere unmittelbar mit einer Antriebswelle (30) des zweiten Antriebsmotors (24, 24A) zusammenwirkt,
und mindestens ein zweites Zahnrad (46 a-c, 46'a-c) der Zahnradanordnung ein Antriebsmoment des ersten Zahnrades (26, 26k) auf die Außenverzahnung (52) überträgt, insbesondere unmittelbar mit dem ersten Zahnrad und der Außenverzahnung kämmt,
wobei die Zahnradanordnung in einem käfigartigen Zahnradträger (44) so gehalten ist, dass zumindest das zweite Zahnrad, bevorzugt das erste und das zweite Zahnrad, bei einer Demontage des Verstellrades und/oder einer das Drehantriebsrad (38) antreibenden Baugruppe (32), insbesondere Zahnradeinheit (32), vom Getriebemodul lösbar und austauschbar ist/sind, **dadurch gekennzeichnet, dass** das Verstellrad (54) und der Zahnradträger (44) koaxial auf einer dem zweiten Antriebsmotor (26) zugeordneten Welle (30) gelagert sind.

2. Bohrmaschine nach Anspruch 1, wobei das Verstellrad (54) und der Zahnradträger (44) koaxial auf einer dem zweiten Antriebsmotor (26) zugeordneten Welle (30) und achsparallel zur Spindel (15) gelagert sind.

3. Bohrmaschine nach Anspruch 2, wobei eine das Drehantriebsrad (38) antreibende Zahnradeinheit (32) dem Zahnradträger (44) axial benachbart auf einer dem Verstellrad (54) gegenüberliegenden Seite des Zahnradträgers und koaxial zur Welle (30) vorgesehen ist.

4. Bohrmaschine nach Anspruch 3, wobei an die Welle (30) und/oder an die Zahnradeinheit der zweite bzw. der erste Antriebsmotor um einen Winkel größer 0°, insbesondere rechtwinklig, momenteintragend angreifen.

5. Bohrmaschine nach einem der Ansprüche 1 bis 4, wobei das zweite Zahnrad (46 a-c) der Zahnradanordnung eine einzelne ungestufte Verzahnung aufweist.

6. Bohrmaschine nach einem der Ansprüche 1 bis 4, wobei das erste und/oder das zweite Zahnrad, bevorzugt nur das zweite Zahnrad (46'a-c), der Zahnradanordnung eine gestufte Verzahnung aufweist/en, die für das zweite Zahnrad insbesondere so ausgebildet ist, dass ein erster Zahnradabschnitt (70) eines größeren Zahnkreisdurchmessers mit der Außenverzahnung (52) des Verstellrades (54) und ein zweiter Zahnradabschnitt (72) eines kleineren Zahnkreisdurchmessers mit dem ersten Zahnrad (42 a-c) kämmt.

7. Bohrmaschine nach einem der Ansprüche 1 bis 6, wobei das Verstellrad (54) einen ersten außenverzahnten Verstellradabschnitt (56) eines größeren Zahnkreisdurchmessers zum Zusammenwirken mit der Verstellmutter (58) sowie einen zweiten außenverzahnten Verstellradabschnitt (52) eines kleineren Zahnkreisdurchmessers zum Zusammenwirken mit dem zweiten Zahnrad (46, 46') aufweist.

8. Bohrmaschinensystem aufweisend die Bohrmaschine nach einem der Ansprüche 1 bis 7,
wobei zum Austauschen gegen das mindestens eine erste (42 a-c) und das mindestens eine zweite (46 a-c) Zahnrad der Zahnradanordnung mindestens ein weiterer Satz der ersten und zweiten Zahnräder so vorgesehen ist, dass bei einem Montieren und nachfolgenden Betreiben des weiteren Satzes im Getriebemodul ein abweichendes Übersetzungsverhältnis zwischen dem zweiten Antriebsmotor und dem Verstellrad realisiert ist.

9. Verwendung der Bohrmaschine nach einem der Ansprüche 1 bis 7 als Handbohrmaschine, wobei der erste Antriebsmotor und der zweite Antriebsmotor in einem gemeinsamen, bevorzugt pistolenartigen Handgriff (10) zur manuellen Handhabung aufgenommen sind.

10. Verwendung der Bohrmaschine nach einem der Ansprüche 1 bis 7 zum Fertigen von Bohrungen, insbesondere Passbohrungen, für Luftfahrzeuge und/oder zum Antreiben von Bohrwerkzeugen zum Realisieren von Bohrungen im Durchmesserbereich zwischen 4 und 30mm, bevorzugt zwischen 10mm und 30mm, weiter bevorzugt zwischen 12mm und 25mm, in einem Metall- und/oder Verbundwerkstoffmaterial.

## Claims

1. A drilling machine having a spindle (15) for rotatably driving a drilling tool which is attached or can be attached, and is associated with shared rotary drive means which interact with a first drive motor (24) for the rotatory drive and is associated with shared displacement drive means which interact with a second drive motor (26) for an axial displacement of the spindle in such a manner that
during the rotary drive via the first drive motor, the spindle can be axially displaced via the impact of the second drive motor,
the rotary drive means comprising a rotary drive wheel (38) being connected to the spindle for rotation therewith and the displacement drive means comprising a displacement nut (58) which interacts in a slide-like manner with a threaded section (60) of the spindle (15),
and transmission means for interacting with the rotary drive wheel (38) and the displacement nut (58) being integrated as a transmission module and being realized so as to be connected with the first and the second drive motor (24, 26),
the transmission means comprising a displacement wheel (54) for meshably engaging with a toothing of the displacement nut (58), said displacement wheel (54) being driven in such a manner by a gearwheel arrangement (46, 42) gripping onto an outer toothing (52) of the displacement wheel that
at least one first gearwheel (42 a-c) of the gearwheel arrangement receives a drive torque of the second drive motor, particularly interacting directly with a drive shaft (30) of the second drive motor (24, 24A),
and at least one second gearwheel (46 a-c, 46'a-c) of the gearwheel arrangement transmits a drive torque of the first gearwheel (26, 26k) onto the outer toothing (52), particularly meshing directly with the first gearwheel and the outer toothing,
the gearwheel arrangement being retained in a cage-like gearwheel carrier (44) in such a manner that at least the second gearwheel, preferably the first and the second gearwheel, is/are replaceable and detachable from the transmission module during a dismounting of the displacement wheel and/or an assembly (32) which drives the rotary drive wheel (38), in particular a gearwheel unit (32), **characterized in that**
the displacement wheel (54) and the gearwheel carrier (44) are coaxially mounted on a shaft (30) associated with the second drive motor (26).

2. The drilling machine according to claim 1,
the displacement wheel (54) and the gearwheel carrier (44) being coaxially mounted on a shaft (30) associated with the second drive motor (26) and mounted parallel to the axis of the spindle (15).

3. The drilling machine according to claim 2,
a gearwheel unit (32) driving the rotary drive wheel (38) which is axially adjacent to the gearwheel carrier (44) being provided on a side of the gearwheel carrier opposite to the displacement wheel (54) and coaxially to the shaft (30).

4. The drilling machine according to claim 3,
the second or the first drive motor acting on the shaft (30) and/or the gearwheel unit at an angle greater than 0°, in particular rectangular, so as to introduce a torque.

5. The drilling machine according to any one of claims 1 to 4,
the second gearwheel (46 a-c) of the gearwheel arrangement comprising an individual unstepped toothing.

6. The drilling machine according to any one of claims 1 to 4,
the first and/or the second gearwheel, preferably solely the second gearwheel (46'a-c), of the gearwheel arrangement comprising a stepped toothing which is designed for the second gearwheel particularly in such a manner that a first gearwheel section (70) of a larger toothed circle diameter meshes with the outer toothing (52) of the displacement wheel (54) and a second gearwheel section (72) of a smaller toothed circle diameter meshes with the first gearwheel (42 a-c).

7. The drilling machine according to any one of claims 1 to 6,
the displacement wheel (54) comprising a first externally toothed displacement wheel section (56) of a larger toothed circle diameter for interacting with the displacement nut (58) as well as a second externally toothed displacement wheel section (52) of a smaller toothed circle diameter for interacting with the second gearwheel (46, 46').

8. A drilling machine system having the drilling machine according to any one of claims 1 to 7,
at least one additional set of the first and second gearwheels being provided for replacing the at least one first (42 a-c) and the at least one second (46 a-c) gearwheel of the gearwheel arrangement so that a different transmission translation between the second drive motor and the displacement wheel is realized when mounting and subsequently operating the additional set in the transmission module.

9. A use of the drilling machine according to any one of claims 1 to 7 as a hand drill, the first drive motor and the second drive motor being accommodated in a joint, preferably gun-like, handle (10) for manual handling.

10. The use of the drilling machine according to any one of claims 1 to 7 for producing bores, in particular fitted bores, for aircrafts and/or for driving drilling tools for realizing bores within a diameter range of 4 mm and 30 mm, preferably between 10 mm and 30 mm, more preferably between 12 mm and 25 mm, in a metal material and/or a composite material.

## Revendications

1. Perceuse ayant une tige (15) destinée à entraîner un outil de perçage de manière rotative, l'outil de perçage étant fixé ou pouvant être fixé, des moyens d'entraînement rotatif qui interagissent avec un premier moteur d'entrainement (24) pour l'entraînement rotatif et des moyens d'entraînement de déplacement qui interagissent avec un deuxième moteur d'entraînement (26) pour un déplacement axial de la tige étant conjointement assignés à la tige de telle manière qu'un déplacement axial de la tige peut être réalisé sous l'effet du deuxième moteur d'entraînement pendant l'entraînement rotatif du premier moteur d'entraînement,
les moyens d'entraînement rotatif ayant une roue d'entraînement rotatif (38) qui est reliée de manière fixe en rotation à la tige et les moyens d'entraînement de déplacement ayant un écrou de déplacement (58) qui interagit comme un chariot avec une partie de filetage (60) de la tige (15),
et des moyens de transmission destinés à interagir avec la roue d'entraînement rotatif (38) et avec l'écrou de déplacement (58) étant intégrés comme module de transmission et étant réalisés pour relier le premier et le deuxième moteur d'entraînement (24, 26),
les moyens de transmission ayant une roue de déplacement (54) pour l'engagement engrenant dans une denture de l'écrou de déplacement (58) et la roue de déplacement est entrainée par un assemblage de roues dentées (46, 42) qui s'engage sur une denture extérieure (52) de la roue de déplacement de telle manière
qu'au moins une première roue dentée (42 a-c) de l'assemblage de roues dentées reçoit un couple d'entraînement du deuxième moteur d'entraînement, notamment interagit directement avec un arbre d'entraînement (30) du deuxième moteur d'entraînement (24, 24A),
et au moins une deuxième roue dentée (46 a-c, 46'a-c) de l'assemblage de roues dentées transmet un couple d'entraînement de la première roue dentée (26, 26k) à la denture extérieure (52), notamment engrène directement avec la première roue dentée et la denture extérieure, l'assemblage de roues dentées étant retenu dans un support de roue dentée (44) en forme de cage de telle manière qu'au moins la deuxième roue dentée, de préférence la première et la deuxième roue dentée, peut/peuvent être détachée(s) et échangée(s) du module de transmission pendant un démontage de la roue de déplacement et/ou d'un assemblage (32) qui entraîne la roue d'entraînement rotatif (38), notamment une unité de roue dentée (32), **caractérisée en ce que** la roue de déplacement (54) et le support de roue dentée (44) sont montés de manière coaxiale sur un arbre (30) qui est assigné au deuxième moteur d'entraînement (26).

2. Perceuse selon la revendication 1,
la roue de déplacement (54) et le support de roue dentée (44) étant montés de manière coaxiale sur un arbre (30) qui est assigné au deuxième moteur d'entraînement (26) et de manière parallèle à l'axe de la tige (15).

3. Perceuse selon la revendication 2,
une unité de roue dentée (32) qui entraine la roue d'entrainement rotatif (38) étant prévue axialement adjacente au support de roue dentée (44) sur un côté du support de roue dentée qui est opposé à la roue de déplacement (54) et de manière coaxiale par rapport à l'arbre (30).

4. Perceuse selon la revendication 3,
le deuxième ou le premier moteur d'entraînement agit sur l'arbre (30) et/ou sur l'unité de roue dentée à un angle supérieur à 0°, notamment rectangulaire, afin d'appliquer un couple.

5. Perceuse selon l'une quelconque des revendications 1 à 4,
la deuxième roue dentée (46 a-c) de l'assemblage de roues dentées ayant une denture individuelle non-étagée.

6. Perceuse selon l'une quelconque des revendications 1 à 4,
la première et/ou la deuxième roue dentée, de préférence seulement la deuxième roue dentée (46' a-c) de l'assemblage de roues dentées ayant une denture étagée qui est réalisée pour la deuxième roue dentée, notamment de telle manière qu'une première partie de roue dentée (70) d'un diamètre supérieur d'engrenage engrène avec la denture extérieure (52) de la roue de déplacement (54) et une deuxième partie de roue dentée (72) d'un diamètre inférieur d'engrenage engrène avec la première roue dentée (42 a-c).

7. Perceuse selon l'une quelconque des revendications 1 à 6,
la roue de déplacement (54) ayant une première partie de roue de déplacement (56) à denture extérieure d'un diamètre supérieur d'engrenage pour l'interaction avec l'écrou de déplacement (58) et une deuxième partie de roue de déplacement (52) à denture extérieure d'un diamètre inférieur d'engrenage pour l'interaction avec la deuxième roue dentée (46, 46').

8. Système de perceuse comprenant la perceuse selon l'une quelconque des revendications 1 à 7,
au moins un ensemble additionnel des premières et deuxièmes roues dentées est prévu afin d'échanger l'au moins une première (42 a-c) et l'au moins une deuxième (46 a-c) roue dentée de l'assemblage de roues dentées, de telle manière qu'un rapport de transmission différent entre le deuxième moteur d'entraînement et la roue de déplacement est réalisé quand l'ensemble additionnel est monté et opéré dans le module de transmission.

9. Utilisation de la perceuse selon l'une quelconque des revendications 1 à 7 comme perceuse à main, le premier moteur d'entraînement et le deuxième moteur d'entraînement étant logés dans une poignée (10) commune, de préférence en forme de pistolet, servant à la manipulation manuelle.

10. Utilisation de la perceuse selon l'une quelconque des revendications 1 à 7 servant à réaliser des trous, notamment des trous d'ajustage, pour des aéronefs et/ou servant à entraîner des outils de perçage afin de réaliser des trous dans une plage de diamètres entre 4 mm et 30 mm, de préférence entre 10 mm et 30 mm, plus préférentiellement entre 12 mm et 25 mm, dans un matériau métallique et/ou composite.
